# EUROPÄISCHE PATENTSCHRIFT

(11) **EP 0 843 630 B1**
(45) Veröffentlichungstag und Bekanntmachung des Hinweises auf die Patenterteilung: **22.03.2000**
(21) Anmeldenummer: 96926338.3
(22) Anmeldetag: 12.07.1996
(51) Int. Cl.: B60T 7/06, B60R 21/09

(54) **VORRICHTUNG ZUM LÖSEN DER VERANKERUNG EINES PEDALS VOM AUFBAU EINES KRAFTFAHRZEUGS**
DEVICE FOR SEPARATING A PEDAL MOUNTING FROM THE STRUCTURE OF A MOTOR VEHICLE
DISPOSITIF POUR SEPARER LA FIXATION D'UNE PEDALE DE LA CARROSSERIE D'UN VEHICULE A MOTEUR

(30) Priorität: 09.08.1995 DE 19529347; 29.02.1996 DE 19607690
(43) Veröffentlichungstag der Anmeldung: 27.05.1998
(73) Patentinhaber: Volkswagen Aktiengesellschaft, 38436 Wolfsburg (DE)
(72) Erfinder: SPECHT, Martin, D-82340 Feldafing (DE); SCHRÖTER, Rainer, D-80333 München (DE); KRAUSS, Walter, D-80689 München (DE)
(86) Internationale Anmeldenummer: EP9603069
(87) Internationale Veröffentlichungsnummer: WO9706036

(56) Entgegenhaltungen:
- EP-A- 0 659 615
- DE-A- 2 841 988
- DE-A- 3 904 616
- DE-A- 4 200 360
- DE-A- 4 305 049
- DE-A- 4 305 290
- DE-A- 4 335 511
- DE-A- 4 340 633
- DE-A- 4 409 324
- DE-A- 4 415 642
- US-A- 4 297 550

## Beschreibung

Die Erfindung betrifft eine Vorrichtung zum Lösen der Verankerung eines um eine Achse (Pedalachse) schwenkbaren Pedals vom Aufbau eines Kraftfahrzeugs, wobei der Pedalhebel am Fahrzeugaufbau über die Pedalachse und ein mit einem Fahrzeugbauteil verbundenes Stützelement so verankert ist, daß der Pedalhebel mit einer bestimmten Betätigungskraft um die Pedalachse im Normalbetrieb schwenkbar ist.

Um bei einem Unfall, insbesondere Auffahrunfall, Verletzungen des Fahrzeuginsassen durch das in den Fahrzeuginnenraum geschobene Fußhebelwerk zu vermeiden, ist es bekannt, die Verankerung eines oder mehrerer der Pedale zu lösen, so daß das Risiko von Verletzungen verringert ist.

Eine derartige Sicherheitsvorrichtung beschreibt beispielsweise die DE 43 35 511-A1. Diese zeigt eine von einem Antriebsaggregat angetriebene Schubstange, die normale Relativbewegungen zwischen Antriebsaggregat und Fahrzeug nicht übertragend an dem Aggregat angreift. Bei einer unfallbedingten Verlagerung des Antriebsaggregates während eines Frontalcrashs wirkt die Schubstange unter anderem auf einen am Fahrzeugaufbau angelenkten Pedalhebel in der Weise ein, daß dieser von den Füßen des Insassen weg in eine spritzwandseitige Vertiefung hineingeschwenkt wird. Die aus dem Fahrzeugcrash abgeleitete Bewegungsenergie wird also direkt in das Pedalwerk eingekoppelt. Die Beaufschlagung eines den Pedalhebel haltenden Stützelementes ist dieser Schrift nicht entnehmbar.

Aufgabe der Erfindung ist es, eine Vorrichtung der eingangs genannten Art zu schaffen, bei welcher mit geringem konstruktivem Aufwand die Verankerung wenigstens eines der Pedale vom Fahrzeugaufbau gelöst werden kann.

Diese Aufgabe wird erfindungsgemäß durch die kennzeichnenden Merkmale des Anspruchs 1 gelöst.

Hierdurch wird insbesondere erreicht, daß der Pedalhebel mit geringer Kraft um seine Lagerung im Bereich der Pedalachse bewegbar ist. Die Kraft, welche für die Bewegung des Stützelements aus seiner Stützposition erforderlich ist, kann durch verschiedene Kraftquellen erzeugt werden. Beispielsweise kann hierzu die durch die überhöhte äußere Krafteinwirkung verursachte Bewegung und/oder Verformung eines Fahrzeugbauteils, beispielsweise der den Motorraum abtrennenden Spritzwand, ausgenützt und auf das Stützelement übertragen werden. Ferner kann ein mechanischer oder pyrotechnisch wirkender Kraftspeicher, welcher durch die überhöhte auf das Fahrzeug einwirkende äußere Kraft ausgelöst wird, die erforderliche Bewegungsenergie für das Stützelement aus seiner Stützposition liefern.

In bevorzugter Weise erfolgt die Bewegung des Stützelements aus seiner Stützposition gegen eine Kraft, durch die das Stützelement in seiner Stützposition gehalten wird.

Bei einem Ausführungsbeispiel kann die Achse des Pedals in einem Pedalachsenlager gelagert sein, das über ein Stützelement an einem Fahrzeugbauteil, welches bei überhöhter äußerer Krafteinwirkung gegenüber dem Fahrzeugaufbau beweglich ist, abgestützt ist, wobei das Stützelement bei einer Bewegung des Bauteils aus seiner als Pedalachsenlager stützenden Stützposition zur Freigabe der Verankerung der Pedalachse bewegbar is.

Hierbei wird die bewegliche Anordnung eines Fahrzeugbauteils, beispielsweise die Abstützung über Federn, dazu ausgenützt, daß die bei überhöhter Beschleunigung oder Abbremsung erfolgende Bewegung dieses Bauteils gegenüber dem Fahrzeugaufbau ausgenützt wird, um das Pedal, insbesondere das Pedalachsenlager, aus seiner Verankerung am Fahrzeugaufbau freizugeben.

In bevorzugter Weise wird die Erfindung zum Lösen der Verankerung des Bremspedals eingesetzt. Hierbei kann ausgenützt werden, daß der Bremskraftzylinder über Federn, insbesondere Tellerfedern, am Fahrzeugaufbau, z.B. der Spritzwand, im Motorraum befestigt ist. Das Fahrzeugbauteil, z.B. der Bremskraftverstärker, kann eine Taumelkippbewegung ausführen, wenn überhöhte äußere Kräfte auf ihn einwirken. Diese Bewegung erfolgt gegen die Kraft der Federn, insbesondere der Tellerfedern, über welche die Abstützung am Fahrzeugaufbau erfolgt.

Diese Bewegung des Fahrzeugbauteils überträgt sich auf das Stützelement, welches in bevorzugter Weise starr mit dem Fahrzeugbauteil verbunden ist. Das Stützelement, insbesondere in Stabform, bewegt sich dann aus seiner Stützposition, so daß die Verankerung des Pedals freigegeben ist.

In bevorzugter Weise erfolgt die Freigabe der Verankerung des Pedals entlang einer bestimmten Führungsstrecke. Entlang dieser Führungsstrecke kann eine Reibungskraft auf das Pedal, insbesondere auf die Pedalachsenlagerung, welche entlang der Führungsstrecke geführt werden kann, einwirken. Hierdurch wird die Verletzungsgefahr bei Panikbetätigung des gelösten Pedals verringert. Es kann hierfür ein Hubkanal für die Pedalachsenlagerung vorgesehen sein, entlang welchem gedämpft und/oder mit Reibungskraft beaufschlagt das Pedalachsenlager geführt wird. Am Ende der Führungsstrecke bzw. des Führungskanals wird das Pedalachsenlager vollständig freigegeben.

Es ist auch möglich, daß das Pedalachsenlager sofort bzw. schlagartig nach der Bewegung des Stützelements aus seiner Stützposition freigegeben wird.

Die Freigabe des Pedals, insbesondere der Pedalachsenlagerung, kann duch eine die Freigabe unterstützende Kraft erfolgen. Diese Kraft kann von einem Kraftspeicher, z.B. einer Feder, erzeugt werden. Hierfür eignet sich insbesondere eine Feder, welche eine Vorspannung liefert, mit welcher das Pedalachsenlager am Stützelement beim Normalbetrieb anliegt.

In bevorzugter Weise ist die geführte Bewegung des Pedalachsenlagers bzw. der Pedalachse in die Freigabeposition eine Schwenkbewegung um eine Schwenkachse. Die Pedalachse und das Pedalachsenlager werden dabei um diese Schwenkachse geschwenkt. Am Ende der Schwenkbewegung erfolgt die vollständige Freigabe der Pendelachse und der Pendelachsenlagerung dadurch, daß die Schwenkachse aus ihrer Lagerung am Fahrzeugaufbau sich entfernt.

Um ein unbeabsichtigtes oder mißbräuchliches Lösen des Stützelementes aus seiner Stützposition zu vermeiden, kann eine sensorbetätigte Sperre vorgesehen sein, welche nur dann durch den Beschleunigungssensor gelöst wird, wenn eine überhöhte Fahrzeugbeschleunigung oder -abbremsung auftritt.

Bei einem weiteren Ausführungsbeispiel ist das Stützelement ein ohnehin am Fahrzeug vorhandenes Funktionsbauteil. Es kann sich hierbei beispielsweise um eine Betätigungsstange handeln, mit welcher zwischen dem Pedalhebel und dem Fahrzeugbauteil eine Pedalbetätigung übertragen wird. Beispielsweise kann es sich um die Druckstange handeln, mit welcher vom Bremspedal die Pedalbewegung auf den Bremskraftverstärker übertragen wird.

Um das Lösen der Verankerung zu bewirken, kann das Stützelement vollständig aus seiner Stützposition entfernt werden. Es ist jedoch auch möglich, durch Verformung des Stützelements dieses aus seiner Stützposition bzw. aus seiner Stützfunktion zu entfernen. Wenn das Stützelement in Form einer Betätigungsstange vorgesehen ist, wirkt auf diese zur Verformung ein quer zur axialen Richtung bewegbares Verformungsteil. Die dabei wirkende Verformungskraft kann von einem durch einen fahrzeugsensitiven Sensor ausgelösten Kraftspeicher, insbesondere pyrotechnischen Kraftspeicher, oder aus der Verformung bzw. Bewegung eines Fahrzeugbauteils bei überhöhter äußerer Krafteinwirkung auf das Fahrzeug, z.B. bei einem Unfall, gewonnen werden.

Ferner kann ein stangenförmiges Stützelement, welches insbesondere als Druckstange zur Übertragung des Pedaldruckes auf den Bremsverstärker dient, so ausgebildet sein, daß im Normalbetrieb die von der Pedalbetätigung ausgeübten Kräfte problemfrei übertragen werden und bei überhöhten von außen auf das Fahrzeug einwirkenden Kräften, insbesondere bei einem Unfallgeschehen, gewährleistet wird, daß die Verankerung des Pedals am Fahrzeug gelöst wird. Hierzu kann das Stützelement zumindest in seinem verformbaren Stangenbereich einen rohrförmigen Querschnitt aufweisen.

Das Stützelement kann hierzu im wesentlichen über seine gesamte Längsausdehnung als Rohrprofil ausgebildet sein. Das Rohrprofil läßt sich in einfacher Weise dadurch herstellen, daß auf einen rohrförmigen Rohling von außen insbesondere radial nach innen gerichtete Formgebungskräfte zur Bildung der speziellen Form des Stützelementes, welches insbesondere als Druckstange zwischen einem Bremspedal und einem Bremskraftverstärker wirkt, einwirken. Diese Formgebungskräfte können insbesondere durch Rundkneten des rohrförmigen Rohlings, welcher das Ausgangsmaterial für die hohl ausgebildete Druckstange ist, erzeugt werden.

Bei der Formgebung des Stützelements können an beiden Enden des Stützelementes Gelenkkugeln zur gelenkigen Abstützung des Stützelementes am insbesondere als Bremsverstärker ausgebildeten Fahrzeugbauteil und am Pedalhebel (Bremspedal) angeformt werden. Eine Ausführungsform kann darin bestehen, daß die Gelenkkugel, welche am Pedalhebel abgestützt ist, als Vollkugel ausgebildet ist und beispielsweise durch Schweißen mit dem Hohlprofil des Stützelements verbunden ist.

Anhand der Figuren wird an Ausführungsbeispielen die Erfindung noch näher erläutert. Es zeigt:
- Fig. 1:: ein Ausführungsbeispiel;
- Fig. 2:: eine Draufsicht auf das Ausführungsbeispiel der Fig. 1;
- Fig. 3:: die Betriebsstellung nach dem Lösen des Stützelementes;
- Fig. 4:: eine Betriebsstellung, in welcher das Pedal in seine Freigabeposition bewegt wird;
- Fig. 5:: die endgültige Freigabe der Verankerung des Pedals;
- Fig. 6:: ein beim Ausführungsbeispiel zur Anwendung kommendes Rahmenblech;
- Fig. 7:: in schematischer Darstellung ein weiteres Ausführungsbeispiel in Normalstellung;
- Fig. 8:: die Betriebsstellung dieses Ausführungsbeispiels nach der Pedalentkoppelung:
- Fig. 9:: ein drittes Ausführungsbeispiel in Normalbetrieb;
- Fig. 10:: das dritte Ausführungsbeispiel bei entkoppeltem Pedal;
- Fig. 11:: verschiedene Profile für das bei den Ausführungsbeispielen der Figuren 7 bis 10 verwendbare Stützelement;
- Fig. 12 - 14:: ein weiteres Ausführungsbeispiel in verschiedenen Betriebsstellungen;
- Fig. 15:: ein Ausführungsbeispiel für eine Druckstange, welche Pedalbewegungen auf einem Bremskraftverstärker des Fahrzeugs überträgt;
- Fig. 16:: im Schnitt ein Ausführungsbeispiel für die in Fig. 15 dargestellte Druckstange;
und
- Fig. 17:: eine schnittbildliche Darstellung eines weiteren Ausführungsbeispiels einer Druckstange.

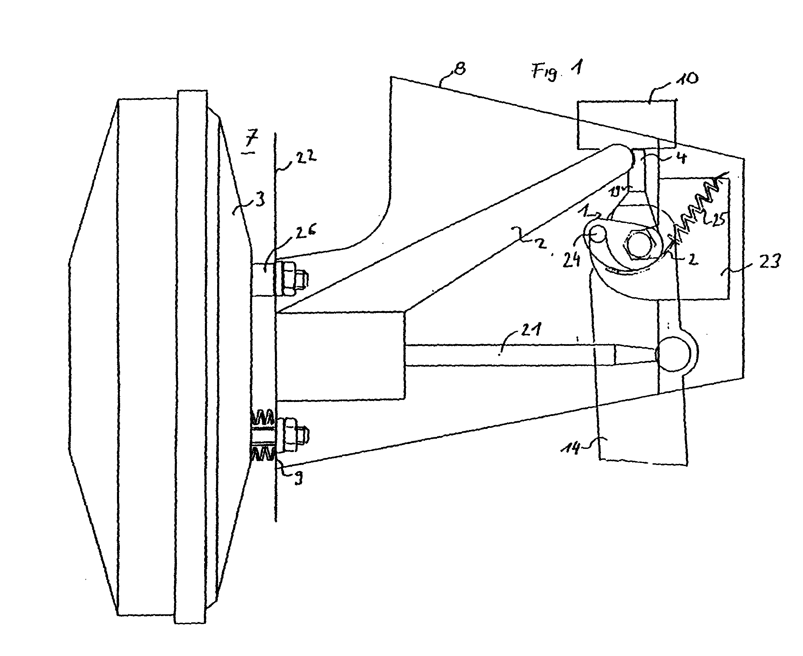

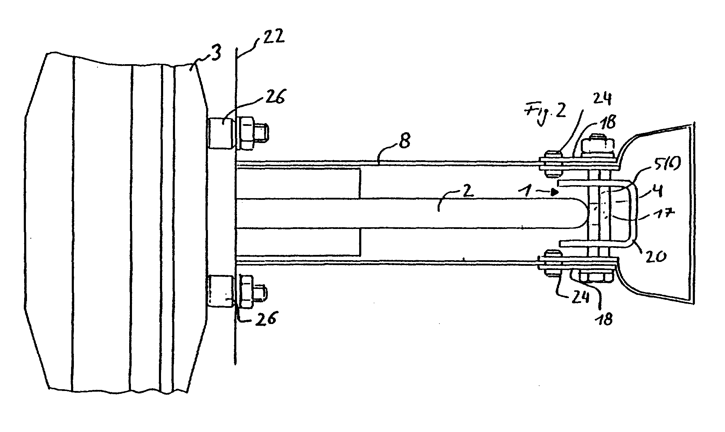

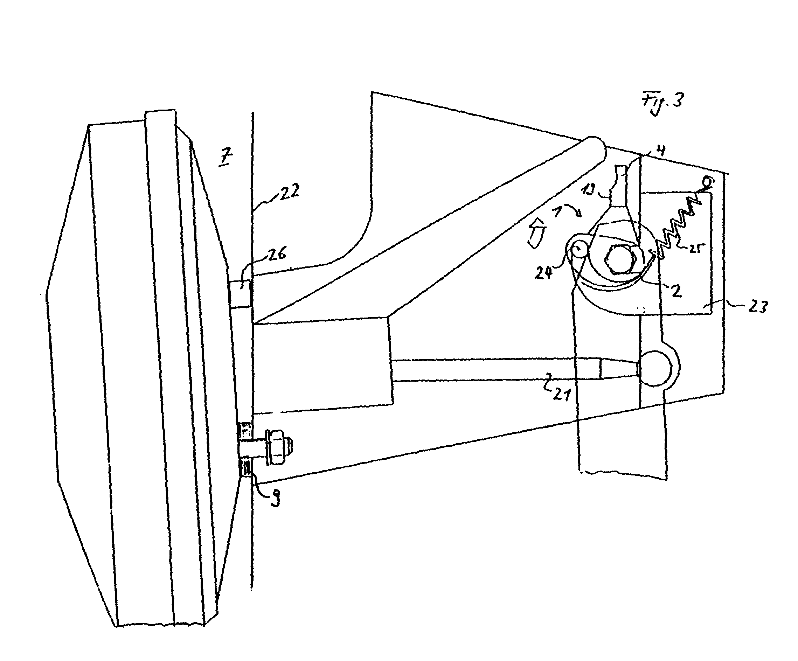

Das in den Figuren 1 bis 6 dargestellte Ausführungsbeispiel hat im Normalbetrieb des Kraftfahrzeugs die in der Figur 1 dargestellte Grundstellung. Das Ausführungsbeispiel besitzt einen Pedalhebel 14, der in einer Pedalachse 5 über ein Pedalachsenlager 1 am Fahrzeugaufbau schwenkbar gelagert ist. Die Pedalachse 5, welche von einem Lagerbolzen 17 gebildet wird, ist in der Nähe der beiden Enden des Lagerbolzens in ersten Ausnehmungen 15 des Fahrzeugaufbaus 8 (Fig. 6) eingesetzt. Die Ausnehmungen 15 sind in zwei zum Fahrzeugaufbau 8 gehörigen Rahmenblechen 16 (Fig. 2) vorgesehen und bilden Verankerungspunkte für die Lagerung der Pedalachse 5. Der die Pedalachse 5 bildende Lagerbolzen 17 ist ferner drehbar gelagert in zwei Lagerscheiben 18. Die beiden Lagerscheiben 18 sind fest verbunden mit einem Anschlag 4, der an einem abstehenden Hebelarm 19 vorgesehen ist. Der Lagerbolzen 17 ist drehbar in den Lagerscheiben 18, welche in der Nähe der beiden Enden des Lagerbolzens 17 vorgesehen sind, gelagert. Die Lagerscheiben 18 sind Bestandteile des Pedalachsenlagers 1 und sind über einen Verbindungsbügel 20 starr miteinander verbunden.

In den beiden Rahmenblechen 16 ist ferner eine um die Pedalachse 5 geschwungene zweite Ausnehmung 12 vorgesehen, welche einen Führungskanal bzw. eine Führungsstrecke bildet. Die Ausnehmung 12 ist an ihrem einen Ende geschlossen und an ihrem anderen Ende in eine dritte Ausnehmung 23 geöffnet, in welche auch die erste Ausnehmung 15, welche zur Achslagerung in der Grundstellung (Figuren 1 und 2) dient, geöffent ist.

In der Grundstellung (Figuren 1 und 2) ist ein an jeder Lagerscheibe 18 vorgesehenes Führungselement 24, beispielsweise in Form eines Wälzkörpers, vorgesehen. Dieses Führungselement liegt am geschlossenen Ende der zweiten Ausnehmung 12 in der Grundstellung an.

An den beiden Lagerscheiben 18 greifen Vorspannfedern 25 an. Die Federn 25 üben eine Vorspannkraft auf die beiden Lagerscheiben 18 bzw. das Pedalachsenlager 1, zu welchem auch der Hebel 19 mit dem daran vorgesehenen Anschlag 4 gehört, aus. Unter der Wirkung der Vorspannkraft der Federn 25 liegt der Anschlag 4 an einem Stützelement 2 an. Dieses wie ein Auslegerarm ausgebildete Stützelement 2 ist starr mit einem Fahrzeugbauteil 3 verbunden, welches beim dargestellten Ausführungsbeispiel ein Bremskraftverstärker ist. Das Fahrzeugbauteil 3 ist über Federn 9, insbesondere Tellerfedern, am Fahrzeugaufbau 8 gegen die Kraft der Feder 9 kippbar abgestützt. Diese Kippbewegung kann um oben liegende Befestigungsstellen 26 erfolgen.

Über eine Betätigungsstange 21 werden die Pedalbewegungen um die Pedalachse 5 in das als Bremskraftverstärker ausgebildete Fahrzeugbauteil 3 eingeleitet.

Bei der in der Fig. 1 dargestellten Grundstellung wird durch die Vorspannkraft der Federn 25 das Pedalachsenlager 1 gegen das mit dem Fahrzeugbauteil 3 bevorzugt starr verbundene Stützelement 2 im Bereich des Anschlages 4 abgestützt. Die Vorspannkraft der Federn 25 wirkt auf das Pedalachsenlager 1 so ein, daß ein Drehmoment am Pedal - achsenlager 1 bezüglich der Pedalachse 5 wirkt. Hierzu ist ein Verbindungsteil 27 vorgesehen, welches sich von der jeweiligen Vorspannfeder 25 entlang einer gebogenen Seilführung bis zu einem jeweiligen Angriffspunkt 28 an der Lagerscheibe 18 erstreckt. Durch das Zusammenwirken der vom Stützelement 2 ausgeübten Stützfunktion für das Pedalachsenlager 1 und die auf das Pedalachenlager 1 einwirkende Vorspannkraft der Federn 25 wird in den ersten Ausnehmungen 15 und den zweiten Ausnehmungen 12 der Rahmenbleche 16 in der Grundstellung eine einwandfreie Verankerung der Pedalachse 5 am Fahrzeugaufbau 8 erreicht.

Ferner ist eine am Fahrzeugaufbau 8 abgestützte Sperre 11 vorgesehen, welche das Stützelement 2 gegen eine unbeabsichtigte oder mißbräuchliche Bewegung sperrt. Die Sperre 11 wird nur dann gelöst, wenn von einem Beschleunigungssensor 10 eine überhöhte Fahrzeugbeschleunigung bzw. -abbremsung festgestellt wird.

Wenn beispielsweise bei einem Unfallgeschehen ein derartiger Fall auftritt, wird die Sperre 11 gelöst. Ferner wirken von außen auf das Kraftfahrzeugbauteil 3 derartige Kräfte ein, daß die Feder bzw. Federn 9 zusammengedrückt wird bzw. werden und das Fahrzeugbauteil um die oberen Befestigungsstellen 26 gekippt bzw. geschwenkt wird. Diese Bewegung überträgt sich auf das Stützelement 2, welches, wie in der Fig. 3 dargestellt ist, vom Anschlag 4 am Pedalachsenlager 1 wegbewegt wird. Unter dem Einfluß der Vorspannfedern 25 werden dann die beiden Lagerscheiben 18 um eine Schwenkachse 6 des Pedalachsenlagers 1 geschwenkt, welche beim dargestellten Ausführungsbeispiel mit der Pedalachse 5 zusammenfällt. Diese Schwenkachse 6 kann auch an einer anderen Stelle parallel zur Pendelachse 5 ausgerichtet am Fahrzeugbauteil 8 abgestützt vorgesehen sein.

Bei dieser Schwenkbewegung werden die Führungselemente 24 entlang ihren zugeordneten zweiten Ausnehmungen 12 geführt. Die Führungselemente 24 können in Zusammenwirkung mit den Begrenzungsflächen der zweiten Ausnehmungen 12 reibende und dämpfende Wirkung haben. Es werden beim dargestellten Ausführungsbeispiel auf diese Weise Reibungskraftpaare gebildet, die zwischen den beiden verschwenkten Lagerscheiben 18 und dem Fahrzeugaufbau 8 zur Wirkung kommen. Die Lagerscheiben 18 und der damit verbundene Hebelarm 19 werden, wie in der Fig. 4 dargestellt ist, in Richtung eines Pfeiles 13 um die zugeordneten Schwenkachse 6, welche, wie schon erläutert, beim Ausführungsbeispiel die Pedalachse 5 ist, in Richtung auf das offene Ende der Ausnehmung 12 geschwenkt. Dabei gelangen die Führungselemente in die dritte Ausnehmung 23, in welche das offene Ende der zweiten Ausnehmung 12 mündet.

Wenn während der Bewegung der Lagerscheiben 18 entlang der von der zweiten Ausnehmung 12 gebildeten Führungsstrecke das Bremspedal insbesondere panikartig betätigt wird, wird die Verletzungsgefahr des Fahrzeuginsassen, der das Bremspedal betätigt, durch die dämpfende und/oder reibungsbehaftete Wirkung der Führungselemente 24 verringert. Die Führungselemente 24 sowie die Lagerscheiben 18 gelangen in die vergrößerte dritte Ausnehmung 23, in welche auch der Lagerbolzen 17, welcher die Pedalachse 5 bildet, bewegt wird. Dies wird dadurch ermöglicht, daß die erste Ausnehmung 15 zur dritten Ausnehmung 23 hin geöffnet ist und der Lagerbolzen 17 vollständig von seiner Verankerung mit den Rahmenblechen 16 des Fahrzeugaufbaus 8 gelöst wird.

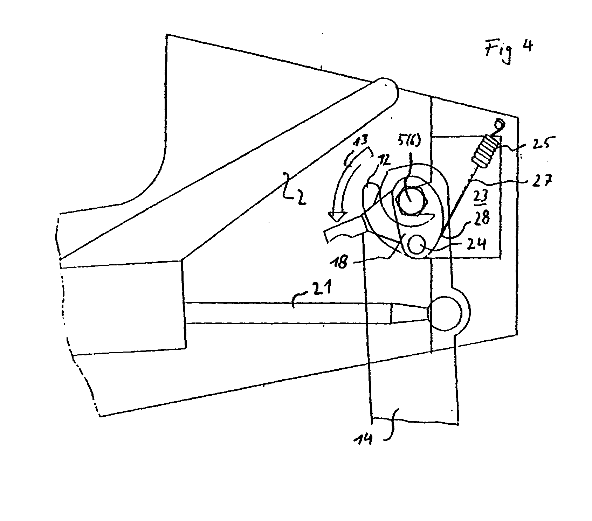

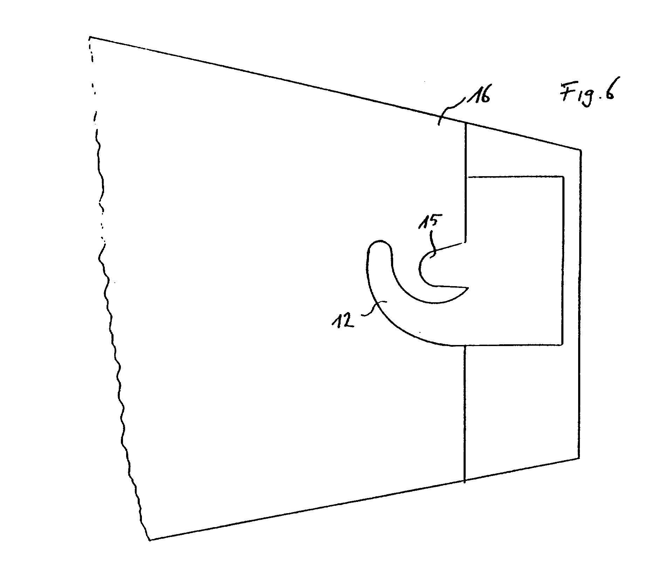

Bei den in den Figuren 7 bis 14 dargestellten Ausführungsbeispielen ist das Stützelement die Betätigungsstange 21, welche zwischen dem Pedalhebel 14 und dem Fahrzeugbauteil (Bremskraftverstärker) 3 wirksam ist und zur Übertragung der Pedalbewegung auf das Fahrzeugbauteil 3 dient. In den Figuren 7 und 9 ist die normale Betriebsposition dargestellt. Hierbei werden die Bewegungen des Pedalhebels 14 in axialer Richtung über die als Druckstange wirkende Betätigungsstange 21 auf den Bremskraftverstärker, welcher das Fahrzeugbauteil 3 bildet, übertragen. In dieser Normalposition stützt sich der Pedalhebel 14 am Fahrzeugaufbau über das Pedalachsenlager 1 und eine Abstützstelle 38 am Fahrzeugaufbau ab. Die Abstützstelle 38 bildet die gelenkige Verbindungsstelle zwischen dem Pedalhebel 14 und der Betätigungsstange 21. Hierdurch ist der Pedalhebel 14 um die Pedalachse schwenkbar am Fahrzeugaufbau in der normalen Betriebsstellung verankert.

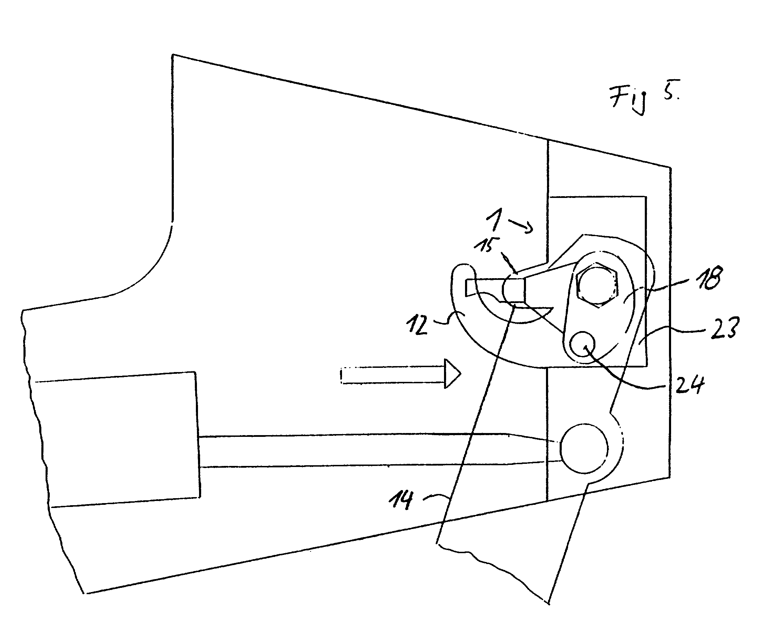

Zum Lösen dieser Verankerung sind in den beiden Ausführungsbeispielen der Figuren 7 bis 14 Mittel vorgesehen, welche die Betätigungsstange 21 verformen, insbesondere abknicken, wie es in den Figuren 8, 10, 13 und 14 dargestellt ist. Hierzu ist ein jeweiliger Angriffspunkte 31 vorgesehen, welcher bei einer überhöhten Krafteinwirkung auf das Fahrzeug während eines Unfallgeschehens quer zur axialen Richtung der Betätigungsstange 21 bewegt wird, so daß die Betätigungsstange verformt wird bzw. abgeknickt wird. Wie insbesondere aus den Figuren 8, 10 und 14 zu ersehen ist, wird dabei der Pedalhebel 14 aus der normalen Betriebsposition weg von den Füßen des Fahrers bewegt. Außerdem kann eine mechanische Entkopplung aus der in den Figuren 7, 9 und 12 dargestellten Verankerung des Pedalhebels 14 erfolgen.

Das Verletzungsrisiko bei plötzlicher Betätigung des Pedals (Panikbetätigung) wird noch dadurch gemindert, daß nach der Entkopplung bei der Pedalbetätigung ein bestimmter Verformungswiderstand in der verformten Betätigungsstange 21 (Figuren 8, 10 und 13) noch vorhanden ist, so daß ein völlig widerstandsfreies Durchtreten des Pedals verhindert wird. Ansonsten wird durch die Pedalentkopplung zusätzlicher Freiraum geschaffen, da das Pedal aus dem Fußraum bewegt ist.

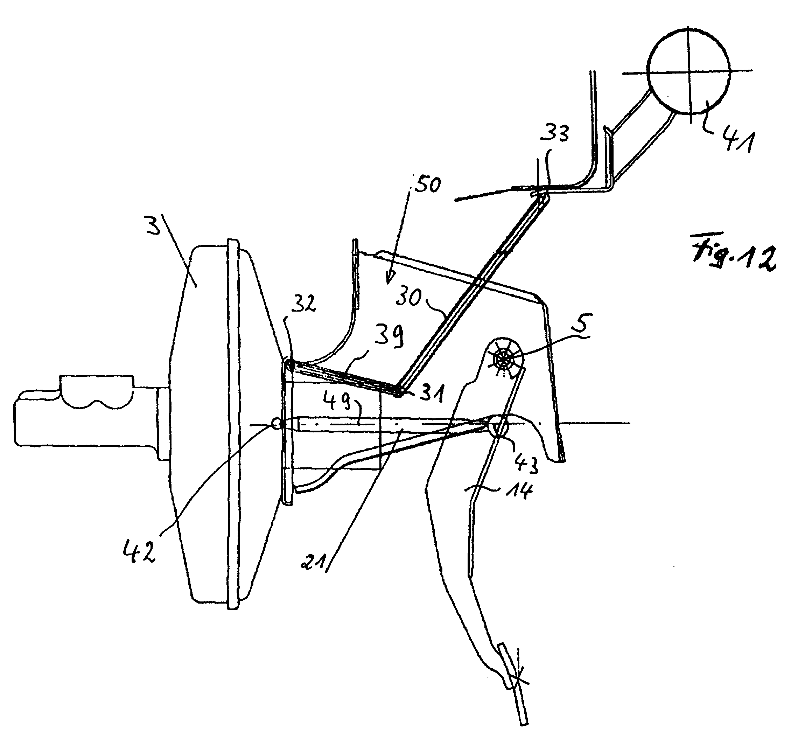

Bei den dargestellten Ausführungsbeispielen wird eine Verformung oder Bewegung eines Fahrzeugbauteils, insbesondere der Spritzwand 22, ausgenützt, um die Kräfte zu erzeugen, welche zur Verformung der Betätigungsstange 21 erforderlich sind. Bei dem in den Figuren 7, 8 und 12 bis 14 dargestellten Ausführungsbeispielen ist hierzu der Angriffspunkt 31 über steife Verstrebungen 39 und 40 an Abstützpunkten 32 und 33 des Fahrzeugaufbaus abgestützt. Beim Verformen der Spritzwand nach innen entstehen aufgrund der steifen Verstrebungen, die an der Spritzwand 22 im Abstützpunkt 32 und am Abstützpunkt 33 schräg oberhalb des Angriffspunktes 31 am Fahrzeugaufbau abgestützt ist. Kräfte, deren Resultierende quer zur axialen Richtung der Betätigungsstange 21 auf den Angriffspunkt 31 wirkt, so daß, wie es in den Figuren 8, 13 und gezeigt ist, die Betätigungsstange 21 verformt bzw. abgeknickt wird. Hierbei bleibt der Abstützpunkt 33 im wesentlichen ortsfest, während der an der Spritzwand 22 vorgesehene Abstützpunkt 32 sich nach innen in Richtung zum Fahrzeuginnenraum hin bewegt.

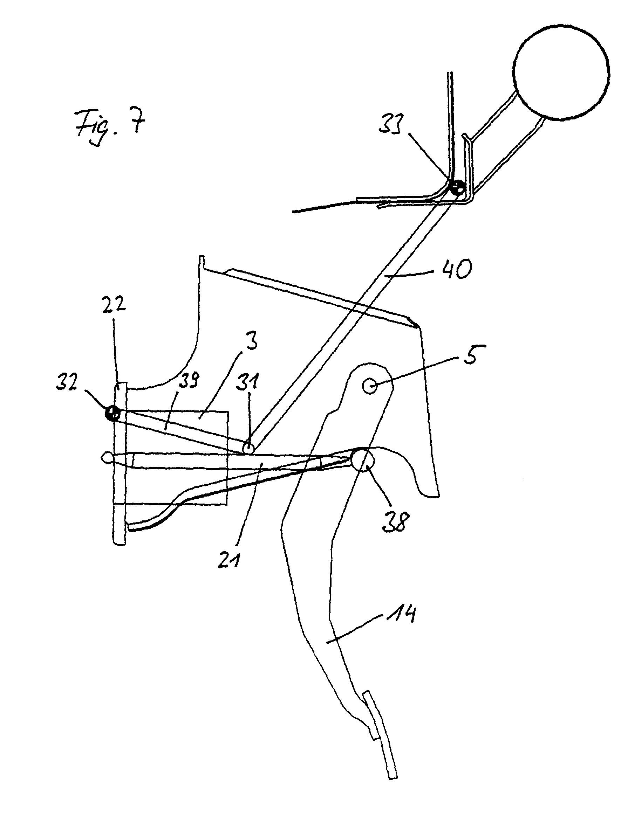

Bei dem in den Figuren 9 und 10 dargestellten Ausführungsbeispiel ist eine Kurbel 35 vorgesehen, welche um eine Kurbelachse 37 drehbar ist. Diese Drehung wird verursacht durch eine Verformung der Spritzwand oder Bewegung eines anderen Bauteils am Kraftfahrzeug. Die Bewegung bzw. Verformung wird über eine Kraft- bzw. Bewegungsübertragungsstelle 36 auf die Kurbel 34 übertragen. Mit der Kurbel 34 ist starr eine Klinke 35 verbunden, welche in Form eines quer verlaufenden Stabes den Angriffspunkt 31 aufweist. Beim Drehen der Kurbel 34 wird der Angriffspunkt 31 nach oben bewegt, so daß die Betätigungsstange 21, wie es in Figur 10 dargestellt ist, verformt bzw. abgeknickt wird. Auch hierbei ergibt sich die Entkoppelung des Metallhebels 14 aus der Verankerung, welche in der in der Fig. 9 dargestellten Normalposition vorhanden ist.

Zur Erzeugung der Verformungskraft, welche an der Angriffsstelle 31 wirkt, kann auch ein Kraftspeicher, insbesondere pyrotechnischer Kraftspeicher, vorgesehen sein, welcher durch eine fahrzeugsensitive Sensoreinrichtung ausgelöst wird. Derartige Kraftspeicher sind beispielsweise als Strafferantriebsmittel zum Strammen eines Sicherheitsgurtes bekannt (DE 42 00 360 A1 und 43 05 049 A1). Diese Antriebsmittel können direkt am Angriffspunkt 31 angreifen oder indirekt beispielsweise über die im Ausführungsbeispiel der Figuren 9 und 10 gezeigte Kurbel.

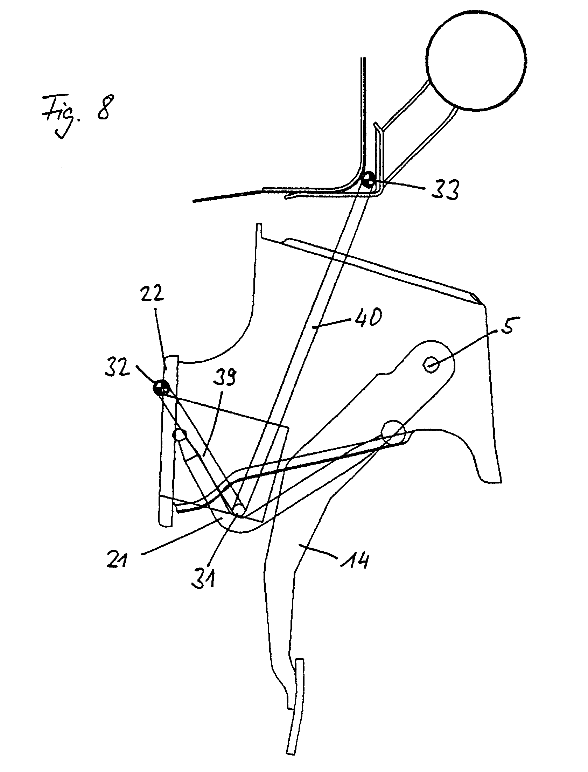

In der Figur 11 sind verschiedene Profile für die Betätigungsstange dargestellt. In der Figur 11 (a) ist ein rundes Profil dargestellt. In der Figur11 (b) ist ein elliptisches Profil dargestellt. In bevorzugter Weise wirkt bei diesem Profil in der Figur 11 gesehen der Angriffspunkt 31 von oben oder von unten, wie es in den Figuren 7 bis 10 dargestellt ist, an der Betätigungsstangen 21. In der Figur11 (c) ist ein rohrförmiges Profil dargestellt, und in der Figur 11 (d) ist ein rechteckiges Profil dargestellt, wobei auch hier bevorzugt von oben oder von unten her die Angriffsstelle 31 an der Betätigungsstange 21 vorgesehen ist.

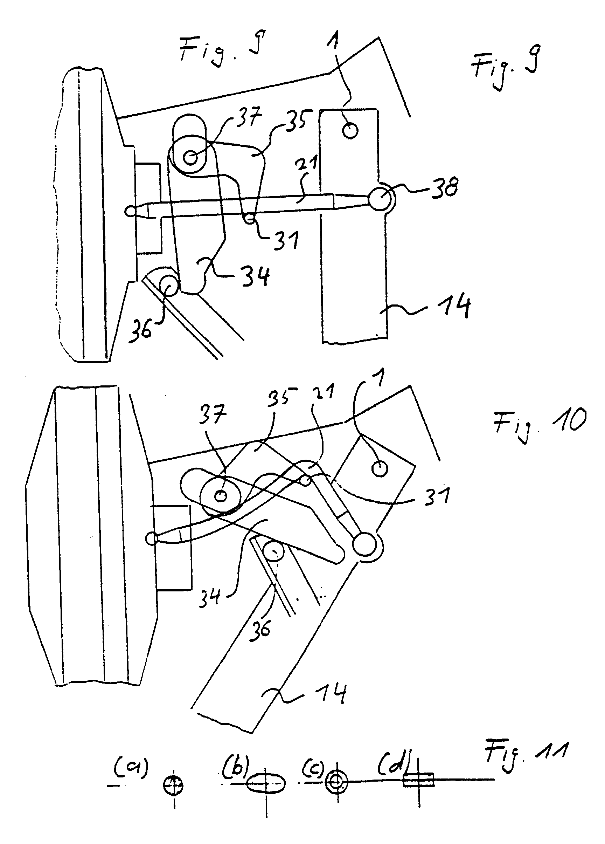

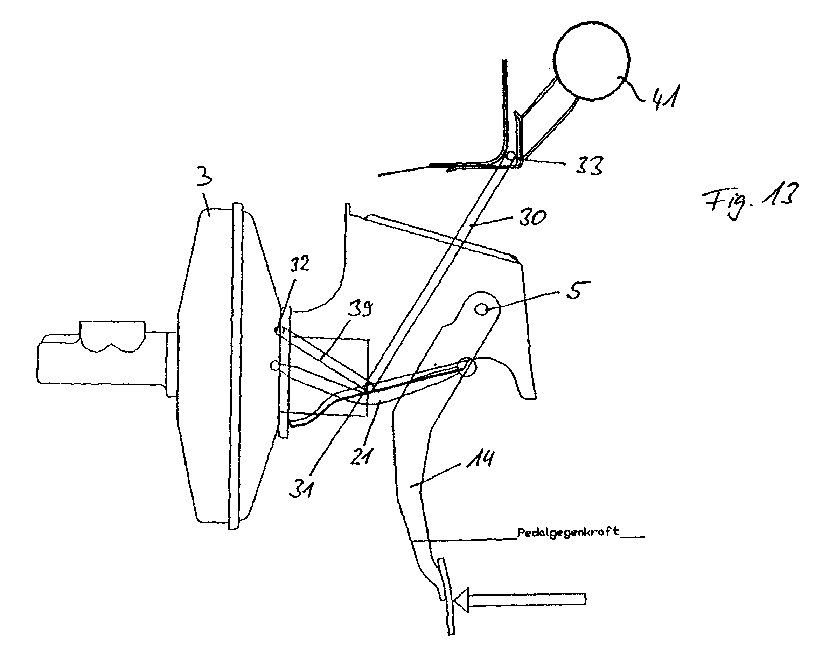

Eine Ausführungsform für das in den Figuren 7 und 8 dargestellte Ausführungsbeispiel ist in den Figuren 12 bis 14 dargestellt. Bei dieser Ausführungsform ist im Bereich eines Lenkungsquerrohres eine steife Pendelstütze (30) schwenkbar im Abstützpunkt 33 am Fahrzeugaufbau angelenkt. Am unteren Ende der Pendelstütze 30 befindet sich die Angriffsstelle 31, welche von der Verstrebung 39 zwangsgeführt wird. Die Verstrebung ist im Bereich des Bremskraftverstärkers 3 an der Spritzwand 22 im Abstützpunkt 32 schwenkbar angelenkt. Bei der Bewegung des Bremskraftverstärkers bzw. der Spritzwand entgegen der Vorwärtsfahrtrichtung, d.h. in Richtung zum Innenraum des Fahrzeugs hin erfolgt eine Zwangsführung der Pendelstütze 30 und der Angriffsstelle 31 durch die steife Strebe 39. Die Angriffsstelle 31 bewegt sich dabei im wesentlichen quer zur axialen Richtung der Betätigungsstange 21, so daß diese verformt wird, wie es aus den Figuren 13 und 14 hervorgeht.

Bei den Ausführungsbeispielen der Figuren 7 bis 14, insbesondere der Figuren 7, 8 und 12 bis 14 kann durch entsprechende Anordnung der Strebe 39 und der Pendelstütze 30 und damit der Angriffsstelle 31 gegenüber der Betätigungsstange 21 eine definierte Pedalgegenkraft bei der Verformung der Betätigungsstange 21 eingestellt werden. Durch diese Pedalgegenkraft kann die kinetische Energie des Bremsfußes beim Auslenken des Bremspedals, insbesondere bei Panikbremsung, durch die Deformation der Betätigungsstange 21 abgebaut werden. Auf diese Weise lassen sich hohe Kontaktgeschwindigkeiten zwischen Fußschräge und Ferse des das Pedal betätigenden Fußes vermeiden. Man erreicht auf diese Weise einen definierten Abbau der Pedalkraft. Im Normalbetrieb befindet sich die Angriffsstelle 31 außer Eingriff mit dem Fußhebelwerk, wie es die Figur 12 zeigt.

Bei den in den Figuren 7, 8 und 12 bis 14 dargestellten Ausführungsformen wird die Relativbewegung des Fußhebelwerks gegenüber einem ortsfest bleibenden Kraftfahrzeugbauteil, insbesondere dem Lenkungsquerrohr 41, ausgenützt, um die Betätigungsstange 21 zur Pedalentkopplung zu verformen.

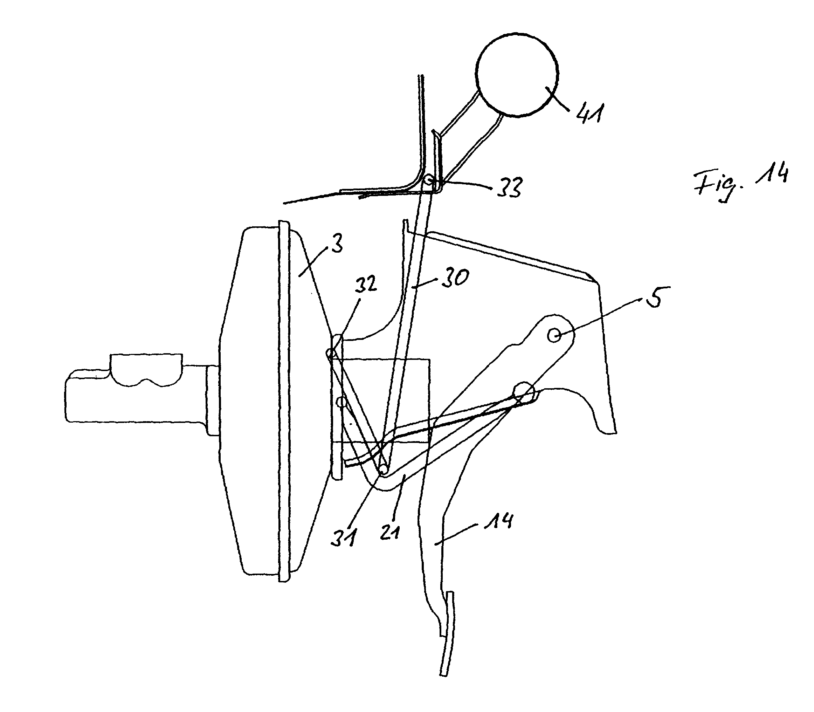

Beim Ausführungsbeispiel der Figuren 12 bis 14 ist der Bereich in der Nähe eines Fußhebelwerks 50 eines Kraftfahrzeugs dargestellt. Der Pedalhebel 14, insbesondere des Bremspedals, ist um die Pedalachse 5 am Fahrzeugaufbau schwenkbar gelagert. Mit dem Pedalhebel 14 ist als weiteres Stützelement 21 die Druckstange, von der weitere Ausführungsbeispiele in den Figuren 15 bis 17 dargestellt sind, gelenkig verbunden. Die Druckstange 21 erstreckt sich in etwa horizontaler Richtung bis zur Eingangsseite des Bremskraftverstärkers 3, der ein Fahrzeugbauteil darstellt. Zur gelenkigen Verbindung der Druckstange 21 mit dem Pedalhebel 14 besitzt die Druckstange 21 an ihrem einen Ende eine Gelenkkugel 43. Zur gelenkigen Verbindung eines Betätigungsteils am Bremskraftverstärker 3 besitzt die Druckstange 21 an ihrem anderen Ende eine weitere Gelenkkugel 42. Im normalen Fahrbetrieb wird beim Betätigen des Bremspedals die Pedalbewegung über den Pedalhebel 14 und die Druckstange 21 auf den Bremskraftverstärker 3 für die Bremsenbetätigung übertragen.

Um bei einem Unfall, insbesondere Auffahrunfall, Verletzungen des Fahrzeuginsassen durch das in den Fahrzeuginnenraum geschobene Fußhebelwerk 50 zu vermeiden, wird die Verankerung des Pedalhebels 14 dadurch gelöst, daß die Druckstange 21 senkrecht zu ihrer Längsachse 49 verformt wird. Dabei wird die Abstützung, welche der Pedalhebel während des Normalbetriebes im Fahrzeug durch die Druckstange 21 hat, gelöst, und insbesondere wird der Pedalhebel 14 vom Fahrzeuginsassen weggeschwenkt. Zur Verformung der Druckstange 21 dient, wie schon beschrieben ist, eine Angriffsstelle 31, welche die Verbindungsstelle der Enden der Pendelstütze 30 und der Verstrebung 39 bildet. Die Pendelstütze 30 besitzt am Fahrzeugaufbau die Abstützstelle 33 in der Nähe eines Lenkungsquerrohres 41. Die Verstrebung 39 besitzt an ihrem anderen Ende die Abstützstelle 32 am Pedalbock des Fahrzeugaufbaus. Die auf die Druckstange 21 zu gerichteten Enden der Pendelstütze 30 und der Verstrebung 29 sind in der Angriffsstelle 31 in einem stumpfen Winkel miteinander verbunden.

Bei einer Bewegung des vorderen Teils des Pedalbockes, insbesondere im Bereich der Abstützstelle 32 in Richtung zum Innenraum des Fahrzeugs hin, beispielsweise bei einem Unfallgeschehen, wird die Angriffstelle 31 durch die Verstrebung 39 und die Pendelstütze 30 zwangsgeführt, so daß sie sich etwa senkrecht zur Längsachse 49 der Druckstange 21 bewegt und die Druckstange 21 verformt wird, wie es beispielsweise in Fig. 13 gezeigt ist.

In den Figuren 15 bis 17 sind Ausführungsbeispiele der Druckstange 21 dargestellt.

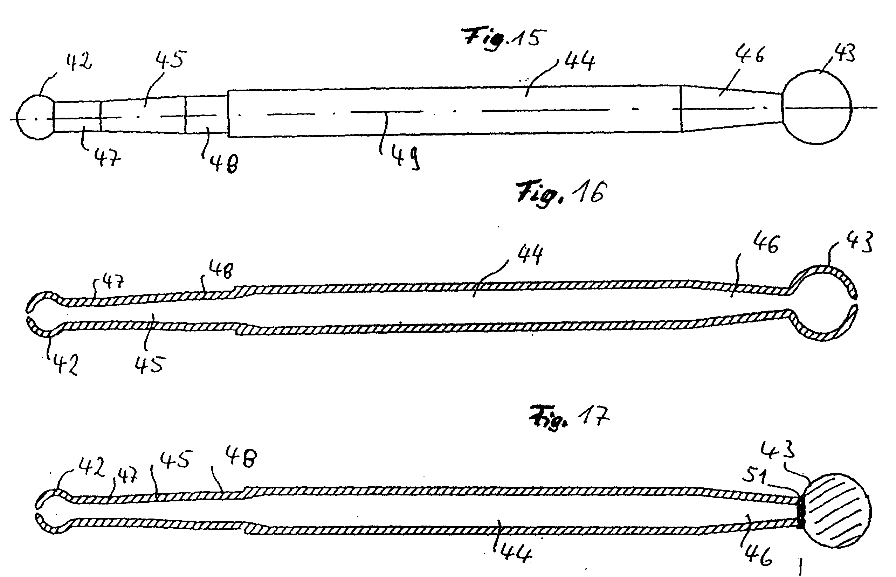

Die Druckstange gemäß den Ausführungsbeispielen besitzt einen verformbaren Stangenbereich 44, welcher hohlzylindrisch ausgebildet ist. An den Enden der Druckstange 21 befinden sich die Gelenkkugeln 42 und 43. Bei dem in Fig. 15 dargestellten Ausführungsbeispiel sind die Gelenkkugeln 2 und 3 ebenfalls hohl ausgebildet. Bei dem in Fig. 17 dargestellten Ausführungsbeispiel ist die Gelenkkugel 42, welche mit dem Betätigungsteil des Bremskraftverstärkers 3 verbunden ist, hohl ausgebildet. Am anderen Ende ist die Gelenkkugel 43 aus einer Vollkugel gebildet. Diese Gelenkkugel 43 ist mit dem Pedalhebel 14 verbunden. Die als Vollkugel ausgebildete Gelenkkugel 43 der Fig. 17 ist durch eine Schweißstelle 51 mit dem übrigen Teil der ein Hohlprofil aufweisenden Druckstange verbunden. Bei dem Ausführungsbeispiel der Fig. 16 besitzt die Druckstange über die gesamte Länge hin ein Hohlprofil.

Zwischen der Gelenkkugel 42, welche mit dem Bremskraftverstärker 3 verbunden ist und dem Ende des verformbaren Stangenbereiches 44 befindet sich ein hohlkegelstumpfförmiger Stangenteil 45. Der hohlkegelstumpfförmige Stangenteil 45 ist über einen hohlzylindrischen Stangenteil 48 mit dem hohlzylindrischen verformbaren Stangenbereich 44 verbunden. Am anderen Ende ist der hohlkegelstumpfförmige Stangenteil 45 über den hohlzylindrischen Stangenteil 47 mit der Gelenkkugel 42 verbunden.

Am anderen Ende ist der verformbare Stangenbereich 44 über einen hohlkegelstumpfförmigen Stangenteil 46 mit der Gelenkkugel 43 verbunden.

Das hohlzylindrische Stangenteil 48 besitzt einen kleineren Außen- und Innendurchmesser als der verformbare Stangenbereich 44. Das hohlzylindrische Stangenteil 47 besitzt einen kleineren Außen- und Innendurchmesser als das holhzylindrische Stangenteil 48.

Die Angriffstelle 31, welche in der Fig. 12 von oben nach unten etwa senkrecht zur Längsaches 49 der Druckstange 21 bewegt wird, wirkt auf den hohlzylindrisch ausgebildeten verformbaren Stangenbereich 44. Aufgrund des Hohlprofils erreicht man insbesondere in einem Unfallgeschehen bei einer Bewegung der vor dem Fußhebelwerk 50 angeordneten Kraftfahrzeugteile in Richtung auf den Innenraum des Fahrzeugs zu eine definierte Verformung der Druckstange 21, wodurch der Fußhebel 14 aus dem Gefahrenbereich gebracht wird, in welchem Verletzungen, insbesondere der Beine des Fahrzeuginsassen, verursacht werden können.

Durch die Gestaltung der Druckstange 21 mit Hohlprofil kann ferner ein definierter Abbau der bei Panikbremsung auf das Pedal ausgeübten Kraft bewirkt werden. Durch entsprechende Bemessung der Wandstärke des Rohrprofils, insbesondere im verformbaren Stangenbereich 44, erreicht man diesen definierten Abbauf der Kraft.

In bevorzugter Weise ist das Rohrprofil der Druckstange der dargestellten Ausführungsbeispiele aus einem rohrförmigen Rohling durch von außen einwirkende Formgebungskräfte gebildet. Hierzu eignet sich bevorzugt eine plastische Umformung mit Hilfe eines Rundknetverfahrens. Mit Hilfe dieses Rundknetverfahrens können die speziellen Rohrteile 44 bis 48 sowie die hohlen Gelenkkugeln 42 und 43 erzeugt werden.

Der Außendurchmesser des Druckrohres 21 beträgt ca. 7 mm bis 15 mm und in bevorzugter Weise 10 mm. Die Wandstärke des Druckrohres beträgt ca. 1 mm bis 2 mm und bevorzugt 1,5 mm. Das Verhältnis von Wandstärke zu Außendurchmesser im verformbaren Stangenbereich 44 der Druckstange 21 liegt zwischen 0,06 und 0,3, bevorzugt bei 0,15.

## Patentansprüche

1. Vorrichtung zum Lösen der Verankerung eines um eine Pedalachse schwenkbaren Pedalhebels vom Aufbau eines Kraftfahrzeuges, wobei der Pedalhebel am Fahrzeugaufbau über die Pedalachse und ein mit einem Fahrzeugbauteil verbundenes Stützelement so verankert ist, daß der Pedalhebel mit einer bestimmten Betätigungskraft im Normalbetrieb um die Pendelachse schwenkbar und - bei gelöster Verankerung - um eine Schwenkachse schwenkbar ist und daß das Stützelement aufgrund überhöhter von außen auf das Fahrzeug einwirkender Kräfte aus seiner - normalen - Stützposition bewegbar ist, **dadurch gekennzeichnet**, daß das Stützelement (2; 21) derartig angeordnet und in eine die Freigabe der Verankerung der Pedalachse (5) entsprechende Position bewegbar und/oder verformbar ausgebildet ist, daß die Schwenkachse (6) im wesentlichen der Pedalachse (5) entspricht.

2. Vorrichtung nach Anspruch 1 , dadurch gekennzeichnet, daß für die Bewegung des Stützelements (2; 21) aus seiner Stützposition eine durch die überhöhte äußere Krafteinwirkung verursachte Bewegung und/oder Verformung eines Fahrzeugbauteils (3; 22) auf das Stützelement (2; 21) übertragbar ist.

3. Vorrichtung nach Anspruch 1, dadurch gekennzeichnet, daß das Stützelement (2; 21) durch einen bei überhöhter äußerer Krafteinwirkung auf das Fahrzeug ausgelösten Kraftspeicher (29) aus seiner Stützposition bewegbar ist.

4. Vorrichtung nach einem der Ansprüche 1 bis 3, dadurch gekennzeichnet, daß die Bewegung des Stützelements (2; 21) aus seiner Stützposition gegen eine Kraft erfolgt, durch die das Stützelement in seiner Stützposition gehalten ist.

5. Vorrichtung nach einem der Ansprüche 1 bis 4, dadurch gekennzeichnet, daß das Fahrzeugbauteil (3) im Motorraum (7) des Kraftfahrzeugs angeordnet ist.

6. Vorrichtung nach einem der Ansprüche 1 bis 5, dadurch gekennzeichnet, daß das Fahrzeugbauteil (3) gegenüber dem Fahrzeugbaufbau (8) über wenigstens eine Feder (9) abgestützt ist und gegen die Kraft dieser wenigstens einen Feder (9) beweglich ist.

7. Vorrichtung nach einem der Ansprüche 1 bis 6, dadurch gekennzeichnet, daß das Fahrzeugbauteil (3) kippbar am Fahrzeugaufbau (8) gelagert ist und die Kippbewegung des Fahrzeugbauteils (3) auf das Stützelement (2) übertragbar ist.

8. Vorrichtung nach einem der Ansprüche 1 bis 7, dadurch gekennzeichnet, daß das Stützelement (2) von einer von einem Beschleunigungssensor (10) betätigbaren Sperre (11) in seiner Stützposition gehalten ist und daß bei überhöhter Fahrzeugbeschleunigung oder -abbremsung der Beschleunigungssensor (10) die Sperre (11) freigibt.

9. Vorrichtung nach einem derAnsprüche 1 bis 8, dadurch gekennzeichnet, daß die Pedalachse (5) in einem Pedalachsenlager (1) gelagert ist, das über ein Stützelement (2) an einem Fahrzeugbauteil (3), welches bei überhöhter äußerer Krafteinwirkung gegenüber dem Fahrzeugaufbau (8) beweglich ist, abgestützt ist, und daß das Stützelement (2) bei einer Bewegung des Fahrzeugbauteils (3) aus seiner das Pedalachsenlager (1) stützenden Stützposition zur Freigabe der Verankerung der Pedalachse (5) bewegbar ist.

10. Vorrichtung nach Anspruch 9, dadurch gekennzeichnet, daß das Pedalachsenlager (1) einen Anschlag (4) aufweist, der mit einer Vorspannkraft am Stützelement (2) anliegt.

11. Vorrichtung nach Anspruch 10, dadurch gekennzeichnet, daß das Pedalachsenlager (1) durch die Vorspannkraft aus seiner Verankerungsposition bewegbar ist.

12. Vorrichtung nach einem der Ansprüche 8 bis 11, dadurch gekennzeichnet, daß die Freigabe der Verankerung der Pedalachse (5) gegen eine Reibungskraft erfolgt.

13. Vorrichtung nach einem der Ansprüche 8 bis 12, dadurch gekennzeichnet, daß die Pedalachse (5) bei der Freigabe der Verankerung entlang einer vorbestimmten Führungsstrecke geführt ist.

14. Vorrichtung nach einem der Ansprüche 8 bis 13, dadurch gekennzeichnet, daß das Pedalachsenlager (1) entlang einer vorbestimmten Führungsstrecke geführt ist.

15. Vorrichtung nach einem der Ansprüche 8 bis 14, dadurch gekennzeichnet, daß die Pedalachse (5) um eine Schwenkachse (6) bei der Freigabe aus der Verankerungsposition bewegbar ist.

16. Vorrichtung nach einem der Ansprüche 8 bis 15, dadurch gekennzeichnet, daß die Schwenkachse (6), um welche das Pedalachsenlager (1) geschwenkt wird, die Pedalachse (5) ist.

17. Vorrichtung nach Anspruch 11 und einem der Ansprüche 12 bis 16, dadurch gekennzeichnet, daß die Reibungskraft während der Führung der Pedalachse (5) entlang der Führungsstrecke auf das Pedalachsenlager (1) wirkt.

18. Vorrichtung nach einem der Ansprüche 8 bis 17, dadurch gekennzeichnet, daß am Ende der Führungsstrecke das Pedalachsenlager (1) aus einer entlang der Führungsstrecke wirksamen Führung (12) freigebbar ist.

19. Vorrichtung nach einem der Ansprüche 1 bis 18, dadurch gekennzeichnet, daß das Stützelement (2) starr mit dem Fahrzeugbauteil (3) verbunden ist.

20. Vorrichtung nach einem der Ansprüche 1 bis 18, dadurch gekennzeichnet, daß das Stützelement (2; 21) beweglich am Fahrzeugbauteil (3) geführt ist.

21. Vorrichtung nach einem der Ansprüche 1 bis 20, dadurch gekennzeichnet, daß das Stützelement (2; 21) stabförmig ausgebildet ist.

22. Vorrichtung nach Anspruch 20 oder 21, dadurch gekennzeichnet, daß das Stützelement (2; 21) in seiner axialen Richtung am Fahrzeugbauteil (3) beweglich geführt ist.

23. Vorrichtung nach einem der Ansprüche 1 bis 22, dadurch gekennzeichnet, daß das Stützelement (2; 21) für die Bewegung aus der Stützposition verformbar ausgebildet ist.

24. Vorrichtung nach einem der Ansprüche 1 bis 23, dadurch gekennzeichnet, daß das Stützelement (21) eine zwischen dem Pedalhebel (14) und dem Fahrzeugbauteil (3) angeordnete Betätigungsstange ist, die eine Pedalbetätigung auf das Fahrzeugbauteil (3) überträgt.

25. Vorrichtung nach einem der Ansprüche 23 bis 24, dadurch gekennzeichnet, daß die Verformungskraft im wesentlichen quer zur axialen Richtung des als Betätigungsstange ausgebildeten Stützelements (21) gerichtet ist.

26. Vorrichtung nach einem der Ansprüche 23 bis 25, dadurch gekennzeichnet, daß durch die Verformungskraft ein Verformungsteil (31) quer zur axialen Richtung des als Betätigungsstange ausgebildeten Stützelements (21) bewegbar ist.

27. Vorrichtung nach einem der Ansprüche 23 bis 26, dadurch gekennzeichnet, daß die Verformungskraft eine Resultierende aus wenigstens zwei Kräften ist, die bei der Verformung bzw. Bewegung des Fahrzeugbauteils (3; 22) entstehen.

28. Vorrichtung nach einem der Ansprüche 23 bis 27, dadurch gekennzeichnet, daß die Verformungsarbeit aus der Relativverschiebung eines Teils des Fahrzeugaufbaus und des Fußhebelwerks abgeleitet ist.

29. Vorrichtung nach einem der Ansprüche 23 bis 28, dadurch gekennzeichnet, daß eine durch die Verformung bzw. Bewegung eines Fahrzeugbauteils (3; 22) zwangsgeführte und am Fahrzeugaufbau schwenkbar gelagerte Pendelstütze (30) das als Betätigungsstange ausgebildete Stützelement (21) verformt.

30. Vorrichtung nach einem der Ansprüche 23 bis 26, dadurch gekennzeichnet, daß die Verformungskraft durch einen insbesondere pyrotechnisch ausgebildeten Kraftspeicher gebildet ist.

31. Vorrichtung nach einem der Ansprüche 24 bis 30, dadurch gekennzeichnet, daß das Stützelement (21) zumindest in einem verformbaren Stangenbereich (44) einen rohrförmigen Querschnitt aufweist.

32. Vorrichtung nach einem der Ansprüche 24 bis 31, dadurch gekennzeichnet, daß das Stützelement (21) im wesentlichen über seine gesamte Längsausdehnung ein Rohrprofil hat.

33. Vorrichtung nach einem der Ansprüche 24 bis 32, dadurch gekennzeichnet, daß an den Enden des Stützelementes (21) Gelenkkugeln (42, 43) zur gelenkigen Abstützung des Stützelementes (21) am Fahrzeugbauteil (3) und am Pedalhebel (14) vorgesehen sind.

34. Vorrichtung nach Anspruch 33, dadurch gekennzeichnet, daß wenigstens eine der Gelenkkugeln (42, 43) hohl ausgebildet ist.

35. Vorrichtung nach Anspruch 33 oder 34, dadurch gekennzeichnet, daß die am Pedalhebel (14) abgestützte Gelenkkugel (43) als Vollkugel ausgebildet ist.

36. Vorrichtung nach einem der Ansprüche 24 bis 35, dadurch gekennzeichnet, daß das Stützelement (21) in seinem verformbaren Stangenbereich (44) als Hohlzylinder ausgebildet ist.

37. Vorrichtung nach einem der Ansprüche 24 bis 36, dadurch gekennzeichnet, daß zwischen den Gelenkkugeln (42, 43) und dem verformbaren Stangenbereich (44) hohlkegelstumpfförmige Stangenteile (45, 46) vorgesehen sind.

38. Vorrichtung nach einem der Ansprüche 24 bis 37, dadurch gekennzeichnet, daß das dem Fahrzeugbauteil (3) näher liegende hohlkegelstumpfförmige Stangenteil (45) an seinen beiden Enden hohlzylindrische Stangenteile (47, 48) aufweist, von denen das eine hohlzylindrische Stangenteil (47) mit der mit dem Fahrzeugbauteil (3) verbundenen Gelenkkugel (42) starr verbunden ist und das andere hohlzylindrische Stangenteil (48) mit dem verformbaren Stangenbereich (44) starr verbunden ist.

39. Vorrichtung nach Anspruch 37 und 38, dadurch gekennzeichnet, daß das mit dem verformbaren Stangenbereich (44) verbundene hohlzylindrische Stangenteil (48) einen kleineren Außen- und Innendurchmesser aufweist als der verformbare Stangenbereich (44) und einen größeren Innen- und Außendurchmesser als das mit der Gelenkkugel (42) verbundene hohlzylindrische Stangenteil (47).

40. Vorrichtung nach einem der Ansprüche 24 bis 39, dadurch gekennzeichnet, daß das Stützelement (21) quer zu seiner Längsachse (49) verformbar ist.

41. Vorrichtung nach einem der Ansprüche 24 bis 40, dadurch gekennzeichnet, daß das Stützelement (21) als Druckstange ausgebildet ist, die zwischen einem Bremspedal und einem Bremskraftverstärker des Fahrzeugs wirkt.

42. Vorrichtung nach einem der Ansprüche 24 bis 41, dadurch gekennzeichnet, daß der den rohrförmigen Querschnitt aufweisende Bereich des Stützelements (21) aus einem rohrförmigen Rohling durch von außen einwirkende Formgebungskräfte gebildet ist.

43. Vorrichtung nach einem der Ansprüche 24 bis 42, dadurch gekennzeichnet, daß das Stützelement (21) durch Rundkneten gebildet ist.

44. Vorrichtung nach einem der Ansprüche 24 bis 43, dadurch gekennzeichnet, daß der Außendurchmesser des verformbaren Stangenbereiches (44) ca. 7 mm bis 15 mm beträgt.

45. Vorrichtung nach einem der Ansprüche 24 bis 44, dadurch gekennzeichnet, daß die Wandstärke des rohrförmigen Bereiches des Stützelementes (21) ca. 1 mm bis 2,0 mm beträgt.

46. Vorrichtung nach einem der Ansprüche 24 bis 45, dadurch gekennzeichnet, daß das Verhältnis von Wandstärke zu Außendurchmesser im verformbaren Stangenbereich (44) des Stützelementes (21) zwischen 0,06 und 0,3 liegt.

## Claims

1. Device for the purpose of releasing the mounting of a pedal lever, which can be pivoted about a pedal spindle, from the structure of a motor vehicle, wherein the pedal lever is mounted on the vehicle structure by way of the pedal spindle and a support element which is connected to a vehicle component such that the pedal lever can be pivoted with a predetermined actuating force about the swing axle during normal operation and - when the mounting is released - can be pivoted about a pivot axis and that the support element can be moved out of its - normal - support position by reason of the excessive forces acting from outside upon the vehicle, characterised in that the support element (2; 21) is disposed and formed in such a manner that it can be moved and/or deformed into a position corresponding to the release of the mounting of the pedal spindle (5), that the pivot axis (6) corresponds substantially to the pedal spindle (5).

2. Device according to claim 1, characterised in that in order to move the support element (2; 21) from its support position it is possible to transmit to the support element (2; 21) a movement and/or a deformation of a vehicle component (3; 22) which is caused by the effect of excessive external force.

3. Device according to claim 1, characterised in that the support element (2; 21) can be moved out of its support position by virtue of a force storage device (29) which is triggered in the event of an excessive force acting upon the vehicle.

4. Device according to any one of the claims 1 to 3, characterised in that the support element (2; 21) is moved out of its support position against a force which serves to hold the support element in its support position.

5. Device according to any one of the claims 1 to 4, characterised in that the vehicle component (3) is disposed in the engine space (7) of the motor vehicle.

6. Device according to any one of the claims 1 to 5, characterised in that the vehicle component (3) is supported with respect to the vehicle structure (8) by way of at least one spring (9) and can be moved against the force of this at least one spring (9).

7. Device according to any one of the claims 1 to 6, characterised in that the vehicle component (3) is mounted so as to be able to tilt on the vehicle structure (8) and the tilting movement of the vehicle component (3) can be transmitted to the support element (2).

8. Device according to any one of the claims 1 to 7, characterised in that the support element (2) is held in its support position by a blocking device (11) which can be actuated by an acceleration sensor (10) and that in the event of excessive vehicle acceleration or deceleration the acceleration sensor (10) releases the blocking device (11).

9. Device according to any one of the claims 1 to 8, characterised in that the pedal spindle (5) is mounted in a pedal spindle bearing (1) which is supported by way of a support element (2) on a vehicle component (3) which can be moved with respect to the vehicle structure (8) in the event of excessive external force and that when the vehicle component (3) moves out of its support position supporting the pedal spindle bearing (1) the support element (2) can be moved for the purpose of releasing the mounting of the pedal spindle (5).

10. Device according to claim 9, characterised in that the pedal spindle bearing (1) comprises a stop (4) which lies with a biassing force on the support element (2).

11. Device according to claim 10, characterised in that the pedal spindle bearing (1) can be moved out of its mounting position by virtue of the biassing force.

12. Device according to any one of the claims 8 to 11, characterised in that the mounting of the pedal spindle (5) is released against a frictional force.

13. Device according to any one of the claims 8 to 12, characterised in that as the mounting is released the pedal spindle (5) is guided along a predetermined guide path.

14. Device according to any one of the claims 8 to 13, characterised in that the pedal spindle bearing (1) is guided along a predetermined guide path.

15. Device according to any one of the claims 8 to 14, characterised in that the pedal spindle (5) can be moved about a pivot axis (6) upon being released from the mounting position.

16. Device according to any one of the claims 8 to 15, characterised in that the pivot axis (6), about which the pedal spindle bearing (1) is pivoted, is the pedal spindle (5).

17. Device according to claim 11 and any one of the claims 12 to 16, characterised in that the frictional force acts upon the pedal spindle bearing (1) as the pedal spindle (5) is guided along the guide path.

18. Device according to any one of the claims 8 to 17, characterised in that at the end of the guide path the pedal spindle bearing (1) can be released from a guide (12) which is effective along the guide path.

19. Device according to any one of the claims 1 to 18, characterised in that the support element (2) is rigidly connected to the vehicle component (3).

20. Device according to any one of the claims 1 to 18, characterised in that the support element (2; 21) is guided in a movable manner on the vehicle component (3).

21. Device according to any one of the claims 1 to 20, characterised in that the support element (2; 21) is formed in the shape of a rod.

22. Device according to claim 20 or 21, characterised in that the support element (2; 21) is guided so as to be able to move in its axial direction on the vehicle component (3).

23. Device according to any one of the claims 1 to 22, characterised in that the support element (2; 21) can be deformed for the movement out of the support position.

24. Device according to any one of the claims 1 to 23, characterised in that the support element (21) is an actuating rod which is disposed between the pedal lever (14) and the vehicle component (3) and which transmits a pedal actuation to the vehicle component (3).

25. Device according to any one of the claims 23 to 24, characterised in that the deformation force is directed in a substantially transverse manner to the axial direction of the support element (21) which is formed as an actuating rod.

26. Device according to any one of the claims 23 to 25, characterised in that the deformation force enables a deformation part (31) to move transversely to the axial direction of the support element (21) which is formed as an actuating rod.

27. Device according to any one of the claims 23 to 26, characterised in that the deformation force is a resultant force from at least two forces which are produced when the vehicle component (3; 22) is deformed and/or moved.

28. Device according to any one of the claims 23 to 27, characterised in that the deformation work is derived from the relative displacement of a part of the vehicle structure and the foot lever assembly.

29. Device according to any one of the claims 23 to 28, characterised in that a pendulum support (30) which is forced to move by virtue of the deformation and/or movement of a vehicle component (3; 22) and is mounted so as to pivotable on the vehicle structure deforms the support element (21) which is formed as an actuating rod.

30. Device according to any one of the claims 23 to 26, characterised in that the deformation force is formed by virtue of a force storage device, more specifically of a pyrotechnic design.

31. Device according to any one of the claims 24 to 30, characterised in that the support element (21) comprises a tubular cross-section at least in one deformable rod region (44).

32. Device according to any one of the claims 24 to 31, characterised in that the support element (21) has a tubular profile over substantially its entire longitudinal extension.

33. Device according to any one of the claims 24 to 32, characterised in that the ends of the support element (21) are provided with ball-joints (42, 43) for the purpose of supporting in an articulated manner the support element (21) on the vehicle component (3) and the pedal lever (14).

34. Device according to claim 33, characterised in that at least one of the ball-joints (42, 43) is hollow.

35. Device according to claim 33 or 34, characterised in that the ball-joint (43) which is supported on the pedal lever (14) is formed as a solid ball.

36. Device according to any one of the claims 24 to 35, characterised in that the support element (21) is formed as a hollow cylinder in its deformable rod region (44).

37. Device according to any one of the claims 24 to 36, characterised in that hollow frusto-conical rod parts (45, 46) are provided between the ball-joints (42, 43) and the deformable rod region (44).

38. Device according to any one of the claims 24 to 37, characterised in that the hollow frusto-conical rod part (45) which lies in closer proximity to the vehicle component (3) comprises on its two ends hollow-cylindrical rod parts (47, 48), of which one hollow-cylindrical rod part (47) is rigidly connected to the ball-joint (42) which is connected to the vehicle component (3), and the other hollow-cylindrical rod part (48) is rigidly connected to the deformable rod region (44).

39. Device according to claim 37 and 38, characterised in that the hollow-cylindrical rod part (48) which is connected to the deformable rod region (44) comprises a smaller outer and inner diameter than the deformable rod region (44) and comprises a larger inner and outer diameter than the hollow-cylindrical rod part (47) which is connected to the ball-joint (42).

40. Device according to any one of the claims 24 to 39, characterised in that the support element (21) can be deformed transversely to its longitudinal axis (49).

41. Device according to any one of the claims 24 to 40, characterised in that the support element (21) is formed as a push rod which is effective between a brake pedal and a brake booster of the vehicle.

42. Device according to any one of the claims 24 to 41, characterised in that the region of the support element (21) comprising the tubular cross-section is formed from a tubular blank by virtue of shaping forces which are effective from the outside.

43. Device according to any one of the claims 24 to 42, characterised in that the support element (21) is formed by rotary kneading.

44. Device according to any one of the claims 24 to 43, characterised in that the outer diameter of the deformable rod region (44) amounts to ca. 7 mm to 15 mm.

45. Device according to any one of the claims 24 to 44, characterised in that the wall thickness of the tubular region of the support element (21) amounts to ca. 1 mm to 2.0 mm.

46. Device according to any one of the claims 24 to 45, characterised in that the ratio of the wall thickness to the outer diameter in the deformable rod region (44) of the support element (21) is between 0.06 and 0.3.

## Revendications

1. Dispositif pour libérer l'ancrage d'une pédale pivotant autour d'un axe de pédale de la structure d'un véhicule, le levier de pédale étant ancré à la structure du véhicule par l'intermédiaire de l'axe de pédale et d'un élément d'appui relié à une pièce structurelle de véhicule, de façon qu'en fonctionnement normal le levier de pédale est adapté à pivoter autour de l'axe d'oscillation sous l'action d'une force d'actionnement déterminée et - une fois l'ancrage libéré - il peut pivoter autour d'un axe de pivotement, et de façon que l'élément d'appui puisse quitter sa position d'appui - normale - en présence de forces excessives exercées de l'extérieur sur le véhicule, caractérisé en ce que l'élément d'appui (2 ; 21) est disposé et conçu pour être déplacé et/ou déformé dans une position correspondant à la libération de l'ancrage de l'axe de pédale (5), de sorte que l'axe de pivotement (6) correspond sensiblement à l'axe de pédale (5).

2. Dispositif selon la revendication 1, caractérisé en ce que le déplacement et/ou la déformation d'une pièce structurelle (3 ; 22) du véhicule sous l'action de forces extérieures excessives est transmissible à l'élément d'appui (2 ; 21) pour déplacer celui-ci de sa position d'appui.

3. Dispositif selon la revendication 1, caractérisé en ce que l'élément d'appui (2 ; 21) peut être chassé de sa position d'appui par un accumulateur d'énergie (29) déclenché par l'action de forces extérieures excessives sur le véhicule.

4. Dispositif selon l'une des revendications 1 à 3, caractérisé en ce que le déplacement de l'élément d'appui (2 ; 21) hors de sa position d'appui s'effectue à l'encontre d'une force qui maintient l'élément d'appui en position d'appui.

5. Dispositif selon l'une des revendications 1 à 4, caractérisé en ce que la pièce structurelle (3) du véhicule est disposée dans le compartiment-moteur (7) du véhicule automobile.

6. Dispositif selon l'une des revendications 1 à 5, caractérisé en ce que la pièce structurelle (3) du véhicule est supportée sur la structure (8) du véhicule par au moins un ressort (9) et peut se déplacer à l'encontre de la force dudit ressort (9) au nombre d'au moins un.

7. Dispositif selon l'une des revendications 1 à 6, caractérisé en ce que la pièce structurelle (3) du véhicule est montée sur la structure (8) du véhicule avec la possibilité de basculer, et le mouvement basculant de la pièce structurelle (3) du véhicule est transmissible à l'élément d'appui (2).

8. Dispositif selon l'une des revendications 1 à 7, caractérisé en ce que l'élément d'appui (2) est maintenu en position d'appui par un moyen d'arrêt (11) actionné par un capteur d'accélération (10), et en ce que le capteur d'accélération (10) relâche le moyen d'arrêt (11) en présence d'une accélération ou d'une décélération excessive du véhicule.

9. Dispositif selon l'une des revendications 1 à 8, caractérisé en ce que l'axe de pédale (5) est logé dans un palier d'axe de pédale (1) qui, par l'intermédiaire d'un élément d'appui (2), prend appui sur une pièce structurelle (3) du véhicule, laquelle peut se déplacer par rapport à la structure (8) du véhicule sous l'action d'une force extérieure excessive, et en ce qu'en cas de déplacement de la pièce structurelle (3) du véhicule, l'élément d'appui (2) peut quitter sa position où il sert d'appui au palier d'axe de pédale (1) pour supprimer l'ancrage de l'axe de pédale (5).

10. Dispositif selon la revendication 9, caractérisé en ce que le palier d'axe de pédale (1) comporte une butée (4) qui est plaquée contre l'élément d'appui (2) par une force de précontrainte.

11. Dispositif selon la revendication 10, caractérisé en ce que le palier d'axe de pédale (1) peut être chassé de sa position d'ancrage par la force de précontrainte.

12. Dispositif selon l'une des revendications 8 à 11, caractérisé en ce que la suppression de l'ancrage de l'axe de pédale (5) s'effectue à l'encontre d'une force de frottement.

13. Dispositif selon l'une des revendications 8 à 12, caractérisé en ce que, lors de la suppression de l'ancrage, l'axe de pédale (5) est guidé le long d'un trajet de guidage prédéterminé.

14. Dispositif selon l'une des revendications 8 à 13, caractérisé en ce que le palier d'axe de pédale (1) est guidé le long d'un trajet de guidage prédéterminé.

15. Dispositif selon l'une des revendications 8 à 14, caractérisé en ce que l'axe de pédale (5) peut pivoter autour d'un axe de pivotement (6) lorsqu'il quitte la position d'ancrage.

16. Dispositif selon l'une des revendications 8 à 15, caractérisé en ce que l'axe de pivotement (6) autour duquel pivote le palier d'axe de pédale (1) est l'axe de pédale (5).

17. Dispositif selon la revendication 11 et selon l'une des revendications 12 à 16, caractérisé en ce que, lors du guidage de l'axe de pédale (5) le long du trajet de guidage, la force de frottement agit sur le palier d'axe de pédale (1).

18. Dispositif selon l'une des revendications 8 à 17, caractérisé en ce qu'au terme du trajet de guidage le palier d'axe de pédale (1) peut quitter un guide (12) agissant le long du trajet de guidage.

19. Dispositif selon l'une des revendications 1 à 18, caractérisé en ce que l'élément d'appui (2) est relié de manière rigide à la pièce structurelle (3) du véhicule.

20. Dispositif selon l'une des revendications 1 à 18, caractérisé en ce que l'élément d'appui (2 ; 21) est guidé de manière mobile sur la pièce structurelle (3) du véhicule.

21. Dispositif selon l'une des revendications 1 à 20, caractérisé en ce que l'élément d'appui (2 ; 21) est conçu en forme de barre.

22. Dispositif selon la revendication 20 ou 21, caractérisé en ce que l'élément d'appui (2 ; 21) est guidé de manière mobile dans sa direction axiale sur la pièce structurelle (3) du véhicule.

23. Dispositif selon l'une des revendications 1 à 22, caractérisé en ce que l'élément d'appui (2 ; 21) est conçu pour quitter sa position d'appui en se déformant.

24. Dispositif selon l'une des revendications 1 à 23, caractérisé en ce que l'élément d'appui (21) est une barre d'actionnement disposée entre le levier de pédale (14) et la pièce structurelle (3) du véhicule, qui transmet un actionnement de la pédale à la pièce structurelle (3) du véhicule.

25. Dispositif selon l'une des revendications 23 et 24, caractérisé en ce que la force de déformation est orientée sensiblement transversalement à la direction axiale de l'élément d'appui (21) conformé en barre d'actionnement.

26. Dispositif selon l'une des revendications 23 à 25, caractérisé en ce que, sous l'effet de la force de déformation, une pièce de déformation (31) peut se déplacer transversalement à la direction axiale de l'élément d'appui (21) conformé en barre d'actionnement.

27. Dispositif selon l'une des revendications 23 à 26, caractérisé en ce que la force de déformation est une résultante d'au moins deux forces qui sont générées lors de la déformation ou du déplacement de la pièce structurelle (3 ; 22) du véhicule.

28. Dispositif selon l'une des revendications 23 à 27, caractérisé en ce que le déplacement relatif d'une pièce de la structure du véhicule et de la pédalerie est à l'origine du travail de déformation.

29. Dispositif selon l'une des revendications 23 à 28, caractérisé en ce qu'un bras oscillant (30) soumis à un guidage forcé par la déformation ou le déplacement d'une pièce structurelle (3 ; 22) du véhicule et monté pivotant sur la structure du véhicule déforme l'élément d'appui (21) conformé en barre d'actionnement.

30. Dispositif selon l'une des revendications 23 à 26, caractérisé en ce que la force de déformation est fournie par un accumulateur d'énergie, en particulier de type pyrotechnique.

31. Dispositif selon l'une des revendications 24 à 30, caractérisé en ce que l'élément d'appui (21) présente une section tubulaire au moins dans une zone déformable en forme de barre (44).

32. Dispositif selon l'une des revendications 24 à 31, caractérisé en ce que l'élément d'appui (21) possède un profil tubulaire sensiblement sur la totalité de sa longueur.

33. Dispositif selon l'une des revendications 24 à 32, caractérisé en ce que des rotules d'articulation (42, 43) servant à articuler l'élément d'appui (21) sur la pièce structurelle (3) du véhicule et sur le levier de pédale (14) sont prévues aux extrémités de l'élément d'appui (21).

34. Dispositif selon la revendication 33, caractérisé en ce qu'au moins l'une des rotules d'articulation (42, 43) est de conception creuse.

35. Dispositif selon la revendication 33 ou 34, caractérisé en ce que la rotule d'articulation (43) prenant appui sur le levier de pédale (14) est configurée en rotule pleine.

36. Dispositif selon l'une des revendications 24 à 35, caractérisé en ce que, dans sa zone déformable en forme de barre (44), l'élément d'appui (21) est configuré en cylindre creux.

37. Dispositif selon l'une des revendications 24 à 36, caractérisé en ce que des parties de barre tronconiques creuses (45, 46) sont prévues entre les rotules d'articulation (42, 43) et la zone déformable en forme de barre (44).

38. Dispositif selon l'une des revendications 24 à 37, caractérisé en ce que la partie de barre tronconique creuse (45) la plus proche de la pièce structurelle (3) du véhicule comporte, à ses deux extrémités, des parties de barre cylindriques creuses (47, 48), dont l'une (47) est reliée de manière rigide à la rotule d'articulation (42) reliée à la pièce structurelle (3) du véhicule et dont l'autre (48) est reliée de manière rigide à la zone déformable en forme de barre (44).

39. Dispositif selon les revendications 37 et 38, caractérisé en ce que la partie de barre cylindrique creuse (48) reliée à la zone déformable en forme de barre (44) présente des diamètres extérieur et intérieur inférieurs à ceux de la zone déformable en forme de barre (44) et des diamètres intérieur et extérieur supérieurs à ceux de la partie de barre cylindrique creuse (47) reliée à la rotule d'articulation (42).

40. Dispositif selon l'une des revendications 24 à 39, caractérisé en ce que l'élément d'appui (21) est déformable transversalement à son axe longitudinal (49).

41. Dispositif selon l'une des revendications 24 à 40, caractérisé en ce que l'élément d'appui (21) est configuré en barre de pression qui agit entre une pédale de frein et un amplificateur de force de freinage du véhicule.

42. Dispositif selon l'une des revendications 24 à 41, caractérisé en ce que la zone de l'élément d'appui (21) présentant la section tubulaire est formée à partir d'une ébauche tubulaire par des forces de façonnage exercées de l'extérieur.

43. Dispositif selon l'une des revendications 24 à 42, caractérisé en ce que l'élément d'appui (21) est formé par rétreint rotatif.

44. Dispositif selon l'une des revendications 24 à 43, caractérisé en ce que le diamètre extérieur de la zone déformable en forme de barre (44) est compris entre environ 7 mm et 15 mm.

45. Dispositif selon l'une des revendications 24 à 44, caractérisé en ce que l'épaisseur de paroi de la zone tubulaire de l'élément d'appui (21) est comprise entre environ 1 mm et 2,0 mm.

46. Dispositif selon l'une des revendications 24 à 45, caractérisé en ce que, dans la zone déformable en forme de barre (44) de l'élément d'appui (21), le rapport de l'épaisseur de paroi au diamètre extérieur est compris entre 0,06 et 0,3.
